# EUROPÄISCHE PATENTSCHRIFT

(11) **EP 0 781 214 B1**
(45) Veröffentlichungstag und Bekanntmachung des Hinweises auf die Patenterteilung: **25.11.1998**
(21) Anmeldenummer: 95930682.0
(22) Anmeldetag: 22.09.1995
(51) Int. Cl.: B60K 41/02

(54) **STEUERUNG FÜR EINE AUTOMATISCH BETÄTIGTE KUPPLUNG**
CONTROL FOR AN AUTOMATICALLY OPERATED CLUTCH
COMMANDE D'EMBRAYAGE AUTOMATIQUE

(30) Priorität: 23.09.1994 DE 4434111
(43) Veröffentlichungstag der Anmeldung: 02.07.1997
(73) Patentinhaber: Kongsberg TechMatic UK Limited, Leamington Spa, Warwickshire CV31 3RA (GB)
(72) Erfinder: NORDGARD, Knut, (NO)
(74) Vertreter: Reinhard - Skuhra - Weise & Partner
(86) Internationale Anmeldenummer: IB9500785
(87) Internationale Veröffentlichungsnummer: WO9609184

(56) Entgegenhaltungen:
- EP-A- 0 601 729
- WO-A-92/13208
- DE-A- 4 011 850

## Beschreibung

Die Erfindung betrifft eine Steuerung für eine automatisch betätigte Kupplung nach dem Oberbegriff von Anspruch 1. Mit der Kupplung wird das Drehmoment des Motors eines Kraftfahrzeugs an das Getriebe übertragen oder es wird der Kraftfluss zwischen Motor und Getriebe unterbrochen. Beim Anfahren führt das übertragene Drehmoment zu einer fortschreitenden Zunahme der Geschwindigkeit . Die Drehmomentübertragung erfolgt hier mit schleifender Kupplung, d.h. mit einer Drehzahldifferenz zwischen der Abtriebswelle des Motors und der Antriebswelle des Getriebes. Auch bei anderen Fahrzuständen wird Drehmoment mit einem Schlupf in der Kupplung übertragen, zum Beispiel um Schwingungen in dem Antriebsstrang des Kraftfahrzeugs zu vermeiden.

Bei herkömmlichen Kraftfahrzeugen wird die Kupplung durch den Fahrer über das Kupplungspedal betätigt; d.h. aus- und eingerück. Um die Bedienung eines Kraftfahrzeugs zu erleichtern, den Fahrer zu entlasten und es ihm zu ermöglichen, dem Strassenverkehr mehr Aufmerksamkeit zu widmen, sind automatisch betätigte Kupplungen entwickelt worden.

Eine bekannte Einrichtung steuert eine automatische Reibungskupplung bei einem Betriebszustand wie das Anfahren, Schalten usw. oder bei Übergängen zwischen den Betriebszuständen (DE-A-40 11 850, & US-A-5 176 234). Ein Regeleingriffspunkt der Kupplung für das Anfahren wird abhängig von einer Momenten- oder Winkelmessung im Antriebsstrang ermittelt. Die Kupplung wird bei eingelegtem Gang und stehendem Fahrzeug aus ihrer ausgerückten Stellung mit definierter Geschwindigkeit bis zu einer Stellung geschlossen, in der Motordrehmoment übertragen wird, dieses aber nicht ausreicht, das Kraftfahrzeug zu bewegen. Ein Wert beim Erreichen eines vorgegebenen Momentes oder Winkels, z.B. der Ort der Kupplungsbetätigung, wird ermittelt und gespeichert und danach die Kupplung teilweise wieder geöffnet und in eine sogenannte Wartestellung gebracht.

In der WO-A-92/13208 wird ebenfalls eine Steuerung für eine automatisch betätigte Kupplung mit einem Ausrücker und einem Lagesensor gezeigt. Die Lage des BerÜhrungspunktes (Kiss-point) wird wahrscheinlich auch gespeichert um ihn mit hoher Geschwindigkeit zu erreichen. Diese Regelung schlägt vor, dass nach dem Berührungspunkt die Lage des Stellgliedes der Kupplung in einem Regelkreis so geregelt wird, dass die Motordrehzahl einem Sollwert entspricht. Es wird auch vorgeschlagen, dass bei Schubbetrieb die Motordrehzahl unter der Getriebeeingangsdrehzahl liegt.

Automatisch betätigte Kupplungen ergeben einen Fahrkomfort, der mit dem eines automatischen Getriebes vergleichbar ist, erfordern aber einen wesentlich geringeren Aufwand und ergeben ein geringeres Gewicht. In einigen Fahrsituationen haben sie zusätzliche Vorteile gegenüber automatischen Getrieben.

Um eine Kupplung einerseits sanft und ruckfrei greifen lassen zu können, andererseits aber ein zu langes Schleifen, das zu einem unnötigen Verschleiss des Kupplungsbelages führen würde, zu vermeiden, muss der Eingriffspunkt der Kupplung genau eingehalten werden. Er verändert sich aber in Wirklichkeit abhängig von verschiedenen Einflüssen, insbesondere ist er von der Temperatur und dem Verschleiss abhängig.

Der Erfindung liegt die Aufgabe zugrunde, eine Steuerung für eine automatische Kupplung zu schaffen, durch welche die verschiedenen Einflüsse auf das Eingriffsverhalten der Kupplung ausgeglichen werden.

Diese Aufgabe wird erfindungsgemäss durch die Steuerung nach Anspruch 1 gelöst.

Zweckmässige Weiterbildungen der Erfindung sind in den Unteransprüchen niedergelegt.

Die Vorteile der Erfindung liegen insbesondere darin, dass der Fahrer das Antriebsdrehmoment allein über das Gaspedal steuern muss. Damit werden insbesondere das Fahren auf glattem Untergrund und Parkmanöver bei beengten Platzverhältnissen erleichtert. Die Lebensdauer der Kupplung wird erhöht. Die Kupplungsbetätigung passt sich an den Fahrstil des Fahrers an, sei dieser mehr ökonomisch oder mehr sportlich betont. Ein Rupfen oder Ruckeln der Kupplung oder gar ein Abwürgen des Motors durch eine ungenaue Kupplungsbetätigung werden vollständig vermieden. Andererseits verbleibt die Gangwahl bei Fahrer. Dass hierfür ein Bedürfnis besteht, ergibt sich auch daraus, dass neuerdings bei sportlichen Fahrzeugen der Oberklasse mit automatischem Getriebe dem Fahrer durch zusätliche Massnahmen wieder die freie Gangwahl ermöglicht wird. Wenn bei einer fehlerhaften Schaltung, z.B. von einem sehr hohen in einem sehr niedrigen Gang, nicht eine extrem hohe Kupplungsdrehzahl (von über etwa 12000 U/min) verursacht wird, verhindert die erfindungsgemässe Steuerung ein Überdrehen des Motors. Damit können auch Ruckeln und Schwingungen im Antriebsstrang wirksam verhindert werden, und es entfällt die damit verbundene Geräuschentwicklung im Innern des Fahrzeugs bei langsamem Fahren in einem hohen Gang. Da durch die Kupplungssteuerung ein übermässiges Hochdrehen des Motors verhindert und der Kraftstoffverbrauch vermindert wird, verringert sich die Umweltbelastung durch das Kraftfahrzeug.

Ein wesentlicher Aspekt der Erfindung ist ein hier als Berührungspunkt (auch als "touch point") bezeichneter Eingriffspunkt, der ein für den Fahrer des Kraftfahrzeugs sehr komfortables Steuern der Kupplung ermöglicht und der laufend aktualisiert wird.

Ein Ausführungsbeispiel der Erfindung wird im folgenden Anhand der Zeichnung erläutert. Es zeigen:
- Figur 1: die wesentlichenAntriebs- und Bedienungsteile eines mit einer erfindungsgemässen automatischen Kupplungssteuerung versehenen in Kraftfahrzeugs in schematischer Darstellung;
- Figur 2: eine Aufteilung der Bestandteile der Steuerung nach Figur 1 in Module;
- Figur 3: einen Stellantrieb zum Betätigen einer Kupplung;
- Figur 4: einen Überblick über den Stellantrieb nach Figur 4 und die zugehörige Regelkreise;
- Figur 5: Regelkreise der Kupplungssteuerung nach Figur 1;
- Figur 6: einen Überblick über den Antriebsstrang und die Bedienungselemente eines Kraftfahrzeugs mit einer Kupplungssteuerung nach Figur 1, sowie die darin verwendeten Sensorsignale;
- Figur 7: ein Diagramm zum Erläuterung des Berührungspunktes der Kupplung, und
- Figur 8: eine Stellgliedbewegung einer Kupplungsteuerung nach Figur 1 in Form eines Messdiagramms.

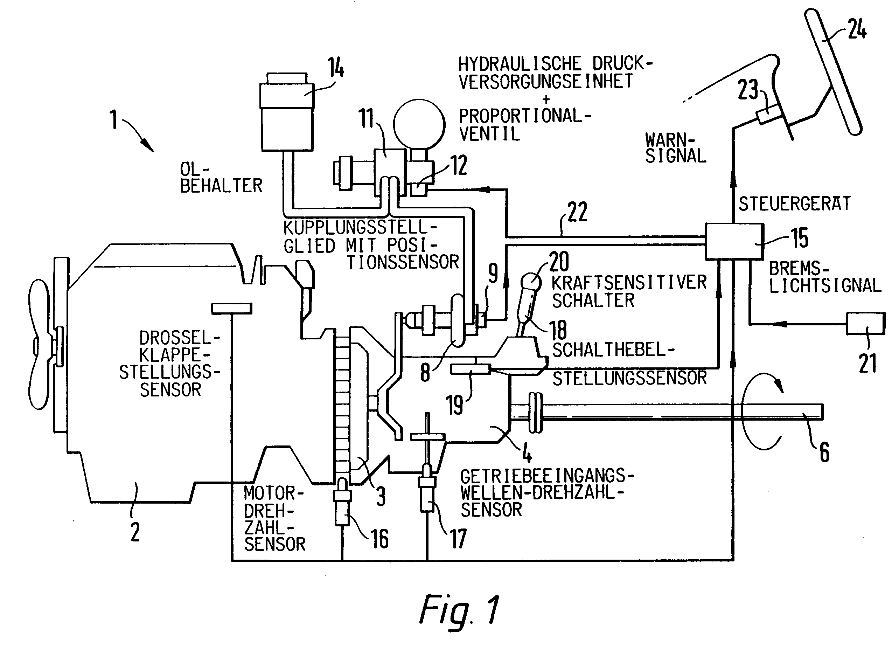

Ein schematisch dargestellter Kraftfahrzeugantrieb 1 (Figur 1) weist auf: einen Motor 2, eine Kupplung 3, ein Getriebe 4 und eine Gelenkwelle 6, die zu einem hier nicht dargestellten Achsantrieb des Kraftfahrzeugs führt. Die Kupplung 3 wird durch ein hydraulisches Stellglied 8 betätigt, dessen axiale Lage durch einen Positionssensor oder Stellungsgeber 9 erfasst wird. Angetrieben wird das Stellglied 8 durch eine hydraulische Druckversorgungseinheit 11 mit integrierten Proportionalventil 12, die mit einem Ölbehälter 14 verbunden ist. Die Hydraulikleitungen (ohne Bezugszeichen) zwischen dem Stellglied 8, der Druckversorgungseinheit 11 und dem Ölbehälter 12 sind mit dicken Strichen dargestellt, während die verschiedenen aus der Zeichnung ersichtlichen Signalleitungen mit feinen Strichen gezeichnet sind.

Ein elektronisches Steuergerät 15 empfängt mehrere Sensorsignale: von einem Motordrehzahlsensor 16, von einem Getriebeeingangswellen-Drehzahlsensor 17, von einem mit einem Schalthebel 18 verbundenen Schalthebelstellungssensor 20, von dem Positionssensor 9 des hydraulischen Stellglieds 8 und von einem Bremslichtschalter 21. Das Steuergerät 15 verarbeitet diese Signale in einer noch zu beschreibenden Weise und erzeugt ein Steuersignal, das über eine Leitung 22 zu den Proportionalventil 12 übermittelt wird. Dieses steuert den Zufluss von unter Druck stehenden Hydrauliköl zu dem hydraulischen Stellglied 8 und damit die Stellung der Kupplung 3. Einzelheiten hierzu werden weiter hinten erläutert.

Die Steuergerät 15 sendet im Falle eines Fehlers, z.B. eines zu starken Verschleisses der Kupplungsbeläge, ein Warnsignal an eine Warnlampe 23, die auf dem Armaturenbrett des Kraftfahrzeugs in der Nähe des Lenkrads 24 angebracht und somit für den Fahrer gut sichtbar ist.

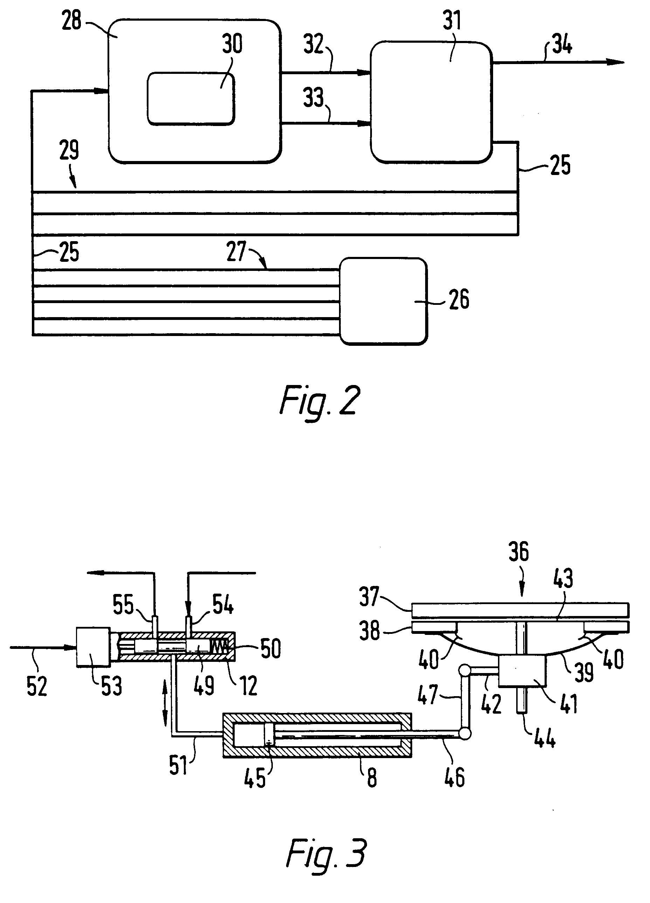

Zur Erläuterung der Wirkungsweise der erfindungsgemässen Kupplungssteuerung dient auch die aus Figur 2 ersichtliche systematische Einteilung der Steuerungsbestandteile in Module, die durch schematisch dargestellte Signal- und Datenleitungen 25 miteinander und mit den bereits erwähnten Sensoren im Kraftfahrzeug verbunden sind. Diese Sensoren sind hier in einem Sensormodul 26 zusammengefasst. Sie senden über Leitungen 27 an ein elektronisches Modul 28 Signale, die folgende Grössen wiedergeben (von oben nach unten): die Motordrehzahl, die Kupplungsdrehzahl, die der Eingangswellendrehzahl des Getriebes entspricht, die Schalthebelstellung, die Bremsbetätigung und die Stellung der Drosselklappe. Über weitere Signal- und Datenleitungen 29 gelangen Signale bezüglich des Ölniveaus in dem Ölbehälter 14, des hydraulischen Arbeitsdrucks und der Position der Kupplung 3 zu dem elektronischen Modul 28.

Das elektronische Modul 28 schliesst ein Programm- oder Softwaremodul 30 ein, das die Programme für das Steuergerät 15 enthält. Ein Hydraulikmodul 31 ist mit dem elektronischen Modul 28 einerseits durch die Signal- und Datenleitungen 29 und andererseits durch eine Versorgungsleitung 32 und eine Steuerleitung 33 verbunden. Über die Versorgungsleitung 32 wird eine zu der hydraulischen Druckversorgongseinheit 11 gehörende Pumpe mit Strom versorgt. Über die Steuerleitung 33 wird das Hydraulikmodul 31 mit einem Strom versorgt, der proportional zu der axialen Stellgeschwindigkeit der Kupplung ist. Das Hydraulikmodul 31 sendet über eine Leitung 34 ein Stellsignal für die Kupplung aus.

Eine schematisch dargestellte Kupplung 36 (Figur 3) besteht im wesentlichen aus der Reibfläche eines Schwungrads 37 des Motors, einer Druckplatte 38, einer Membranfeder 39, die an Schneiden 40 schwenkbar gelagert ist, einem Ausrücker oder Ausrücklager 41, der durch eine Ausrückgabel 42 axial verschoben wird. Zwischen dem Schwungrad 37 und der Druckplatte 38 ist eine Kupplungsscheibe 43 angeordnet, auf der in bekannter Weise Kupplungsbelege befestigt sind.

Die Kupplung 36 wird durch das hydraulische Stellglied 8 betätigt. In der in der Zeichnung dargestellten Lage wird die Druckplatte 38 durch die Membranfeder 39 gegen das Schwungrad 37 gedrückt. Dabei wird die Kupplungsscheibe 43 durch Reibung mitgenommen und überträgt die Drehbewegung des Schwungrads 37 auf eine Antriebswelle 44 des Getriebes.

Wird ein in dem Stellglied 8 verschiebbarer Kolben 45 durch Arbeitsdruck des Hydrauliköls nach rechts verschoben, so schwenkt die Kolbenstange 46 die mit einem rechtwinklig angeordneten Hebel 47 versehene Ausrückgabel 42 nach oben. Dabei wird die Membranfeder 39 über die Schneide 40 geschwenkt und hebt die Druckplatte 38 von der Kupplungsplatte 43 ab, wodurch der Kraftfluss zwischen dem Motor und dem Getriebe des Kraftfahrzeugs unterbrochen wird.

Der Zu- und Abfluss von unter Druck stehendem Hydrauliköl zu dem Stellglied 8 wird durch das Proportionalventil 12 gesteueret. Dieses enthält einen axial beweglichen Schieber 49, der durch eine Feder 50 im gleichgewicht gehalten wird. Ein über eine Leitung 52 mit Strom versorgter Elektromagnet 53 bewegt den Schieber 49 gegen die Wirkung der Feder 50 und verbindet dabei durch an diesem vorhandene Ausnehmungen den Innenraum des Stellglieds 8 entweder mit einer Druckleitung 54, über die unter Druck stehendes Hydrauliköl zugeführt wird, oder mit einer Abflussleitung 55, über die das Hydrauliköl in den Ölbehälter 14 abfliessen kann. Das Steuerventil 12 wird als Proportionalventil bezeichnet, da der von ihm freigegebene Durchflussquerschnitt proportional zu dem Strom durch den Elektromagneten 53 ist. Leigt an den Ventilöffnungen ein konstanter Druckunterschied an, so ist der Hydraulikölstrom durch das Steuerventil 12 proportional zu dem Strom durch den Elektromagneten. Damit wird die Geschwindigkeit der Kolbenstange 46 von dem durch den Elektromagneten 53 fliessenden elektrischen Strom gesteuert.

Durch die hier beschriebene Steuerung soll das von der Kupplung übertragene Drehmoment geregelt werden. Dies wird durch Regeln der axialen Stellung des Kupplungs-Ausrückers 41 erreicht, da das übertragene Drehmoment aufgrund der Kenndaten der Membranfeder 39 in einer definierten funktionellen Abhängigkeit von der Lage des Ausrückers 41 steht. Als Stellglied 8 kann ein Nehmerzylinder einer bekannten hydraulischen Kupplungsbetätigung verwendet werden. Ein in der hydraulischen Druckversorgungseinheit enthaltener Druckbehälter weist einen ausreichenden Hydraulikdruckvorrat auf, um den Spitzenbedarf des Stellglieds 8 zu decken. In Zwischenstellungen des Stellglieds wird der Druckölbedarf nur durch den geringen Leckstrom des Proportionalventils 12 bestimmt.

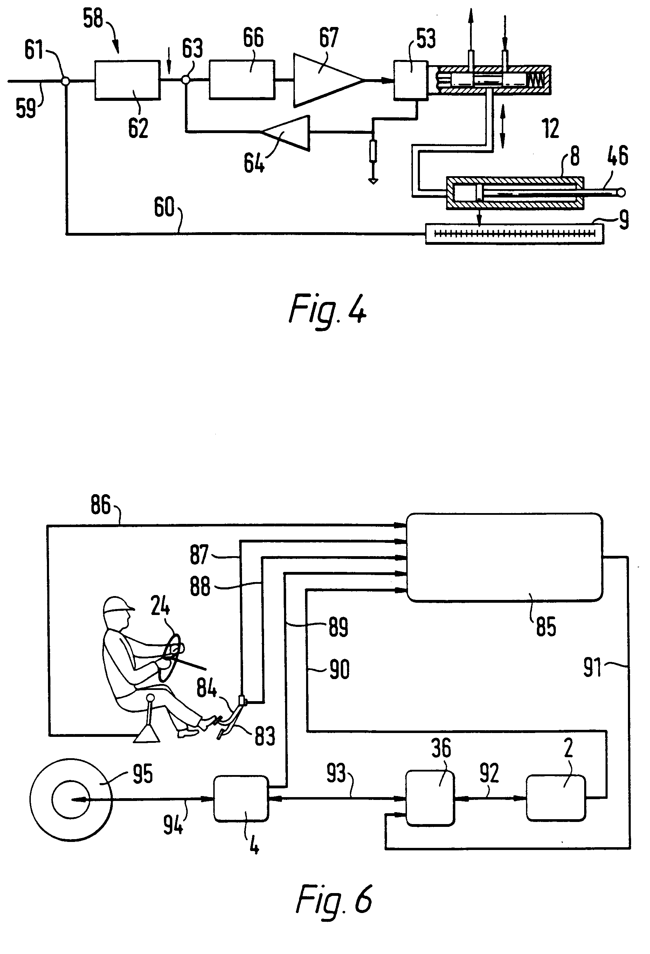

Um das Kupplungsdrehmoment zu regeln, muss die Kupplungsstellung und damit die Lage des Kolbens 45 und der Kolbenstange 46 des hydraulischen Stellglieds 8 geregelt werden. Diese Regelung wird mit einem ersten Regelkreis - einen Stromregelkreis - 58 (Figur 4) durchgeführt, der den durch den Elektromagneten 53 fliessenden Strom regelt. Eingangsgrössen für diesen Regelkreis sind ein über eine Eingangsleitung 59 vorgegebener Lage-Sollwert und ein über eine Rückkopplungsleitung 60 auf den Eingang des Regelkreises rückgeführter Lage-Istwert des Stellgliedes 8 der von dem Positionsgeber 9, z.B. einem Potentiometer, geliefert wird. Die Erzeugung des Lage-Sollwerts wird weiter hinten erläutert.

Anhand der in einem Addierglied 61 gebildeten Regelabweichung zwischen dem Lage-Istwert und dem Lage-Sollwert erzeugt ein Lageregler 62 einen Strom-Sollwert, der einem Addierglied 63 zugeführt wird. In diesem wird die Regelabweichung gegenüber dem von dem Elektromagneten über einen Messverstärker 64 rückgeführten Strom-Istwert gebildet und an einen Stromregler 66 gegeben. Das Ausgangssignal des Stromreglers 66 gelangt über einen Verstärker 67 als Stellgrösse auf den Eingang des Elektromagneten 53. Das Addierglied 61 kann auch als in Form eines Programmbefehls realisiert sein, der die Regelabweichung berechnet. Der Lageregler 62 kann zum Beispiel als gemäss bekannten Regeltheorien sorgfältig entworfener Regelalgorithmus realisiert sein, der den Sollwert für den elektrischen Strom durch den Elektromagneten 53 erzeugt. Der Stromregler 66 ist ebenfalls gemäss bekannten Regeltheorien sorgfältig entworfen, aber schaltungstechnisch realisiert. Sein Ausgangssignal steuert den als Treiber für den Strom durch den Elektromagneten 53 dienenden Verstärker 67.

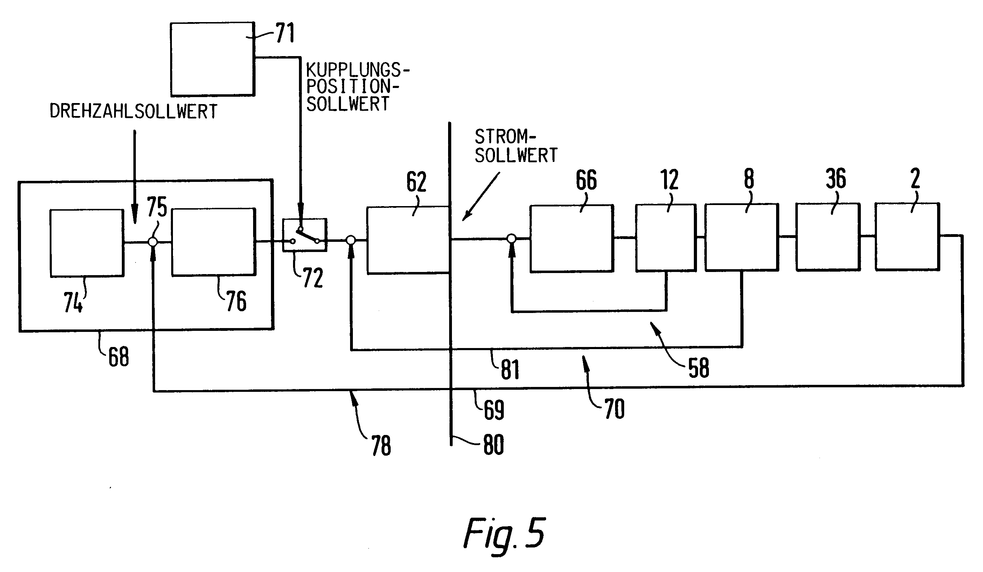

Um das übertragene Drehmoment in den verschiedenen Betriebszuständen, in denen in der Kupplung ein Schlupf auftritt, zu regeln, muss der vorstehend beschriebene Regelkreis ergänzt werden (siehe Figur 5). Einleitend seien nun die der erweiterten Regelung zu Grunde liegenden Überlegungen erläutert. Sie basieren auf einer Analyse der Wechselwirkungen zwischen dem Fahrer, dem Motor, der Kupplung und dem Fahrkomfort eines Kraftfahrzeugs.

Bei einem von Hand geschalteten Kraftfahrzeuggetriebe steueret der Fahrer unmittelbar einerseits über das Kupplungspedal das von der Kupplung zu übertragende Drehmoment und andererseits über das Gaspedal das von dem Motor zu erzeugende Drehmoment.

Eine der Fertigkeiten, die von einem Fahranfänger am schwierigsten zu erwerben sind, ist die Koordination der Betätigung dieser beiden Pedale. Er wird am Anfang entweder den Motor zu sehr hochdrehen, was zu einem erhöhten Verschleiss der Kupplungsbeläge führt, oder die Kupplung zu schnell einrücken, was zu einem unangenehmen Ruckeln des Fahrzeugs oder gar zu einem Abwürgen des Motors führt. Ein erfahrener Fahrer hingegen wird die Betätigung der beiden Pedale so koordinieren, dass das von der Kupplung übertragene Drehmoment in etwa dem von dem Motor erzeugten Drehmoment entspricht. Das bedeutet, dass die Motordrehzahl in etwa konstant gehalten wird. Wenn der Fahrer eine schnellere Beschleunigung des Fahrzeugs wünscht, muss er das von der Kupplung übertragene Drehmoment und gleichzeitig das Motordrehmoment erhöhen. Dies wird dadurch erreicht, dass der Drosselklappenwinkel vergrössert und das Drehmoment bei einere höheren Motordrehzahl im gleichgewicht gehalten wird, indem die Kupplung entsprechend eingestellt wird.

Bei dem hier beschriebenen automatischen Kupplungssystem steuert der Fahrer nicht mehr die Kupplung, er steuert lediglich das von dem Motor zu erzeugenden Drehmoment durch betätigen des Gaspedals. Das hat zu Folge, dass das Kupplungssteuersystem seinerseits das zu übertragende Drehmoment mit dem erzeugten Drehmoment im gleichgewicht halten muss. Gelingt dies, so folgt daraus, dass der Fahrer das auf die Antriebsräder des Kraftfahrzeugs übertragene Drehmoment über das Gaspedal steuert.

Hieraus ergibt sich, dass das Problem, das Drehmoment im Gleichgewicht zu halten, dem Problem entspricht, die Motordrehzahl zu steuern. In diesem Fall ist dann die Kupplung, deren Lageregelung vorstehend beschrieben worden ist, das zu steuernde Element.

Der aus Figur 5 ersichtliche erweiterte Mehrfachregelkreis enthält eine erste Steuerschaltung oder Drehzahlsteuerung 68, einen zweiten, dem Stromregelkreis überlagerten Lageregelkreis 70 und eine zweite Steuerschaltung 71. Er weist zwei unterschiedliche Modi oder Betriebsarten auf: ein erster Modus ohne Kupplungsschlupf und eine zweiter Modus mit Kupplungsschlupf. In dem ersten Modus wird in der zweiten Steuerschaltung 71 ein Lage-Istwert für die Kupplung erzeugt, der über einen Umschalter 72 auf den Eingang des zweiten, überlagerten Regelkreises 70 gegeben wird. In dem zweiten Modus wird in einer dritten Steuerschaltung 74, die z.B. ein Kennfeld enthält, ein Motordrehzahl-Sollwert erzeugt und über einen Addierglied 75 auf den Eingang eines Motordrehzahlreglers 76 gegeben.

Die Ist-Drehzahl des Motors 2 gelangt über eine Rückkopplungsleitung 69 zu dem Addierglied 75 und ergibt dort als Differenz gegenüber dem Drehzahlsollwert die Regelabweichung des Motordrehzahlreglers 76. Dieser ist somit Bestandteil eines dritten, dem Lageregelkreis 70 überlagerten Regelkreises 78 und er kann, abhängig von dem Fahrmodus, als P-, PI- oder als PD-Regler ausgebildet sein. Im Falle eines PI-Reglers regelt der P-Anteil (Proportionalanteil) des Reglers das Kupplungs-Stellglied 8 in eine Lage, deren Abweichung gegenüber dem Berührungspunkt proportional zu der Differenz zwischen der Motordrehzahl und deren Sollwert ist. Daraus folgt, dass die Kupplung mit zunehmender Motordrehzahl stärker in Eingriff gebracht wird. Der I-Anteil (Integralanteil) des Reglers 76 regelt das Kupplungs-Stellglied 8 in eine Lage, deren Abweichung gegenüber dem Berührungspunkt proportional zu dem zeitlichen Integral der Differenz zwischen der Motordrehzahl und deren Sollwert ist. Daraus folgt, dass die Kupplung, wenn die Motordrehzahl über ihrem Sollwert liegt, immer stärker in Eingriff gebracht wird, bis die Abweichung beseitigt ist.

Dei Drebzahlsollwerte für den Motor werden je nach dem Betriebsmodus der Kupplungssteuerung wie folgt erzeugt:
1. Kein Schlupf in der Kupplung:
   Die Kupplung ist vollständig eingerückt, der Sollwert für die Motordrehzahl wird allein durch das Gaspedal vorgegeben.
2. Anfahren aus einer Geschwindigkeit null:
   Dieser Betriebsmodus wird durch einen grossen Schlupf gekennzeichnet, d.h. durch einen grossen Unterschied zwischen der Motordrehzahl und der Kupplungsdrehzahl. Der Motordrehzahl-Sollwert hängt davon ab, wie stark der Fahrer das Gaspedal niedertritt. Genauer gesagt: Der Motordrehzahl-Sollwert muss bei kleinem Drosselklappenwinkel geringfügig über der Leerlaufdrehzahl liegen. Danach muss der Motordrehzahl-Sollwert in Abhängigkeit von dem Drosselklappenwinkel zunehmen, und zwar bis zum Erreichen eines Sättigungswertes, bei dem der Motor sein maximales Drehmoment abgibt.
3. Fahren mit Schlupf:
   Dieser Modus ist dadurch charakterisiert, dass das Fahrzeug mit einer Geschwindigkeit fährt, die - bei dem jeweils eingelegten Getriebegang - innerhalb des zulässigen Drehzahlbereichs des Motors liegt. Durch Einstellen des Motordrehzahl-Sollwertes (mit der Steuerschaltung 74, vgl. Figur 5) geringfügig (etwa 50 U/min) über der Kupplungs(ausgangs)drehzahl können die Steuerungen einen Schlupf dieser Grössenordnung in der Kupplung aufrechterhalten. Der Motordrehzahl-Sollwert wird deshalb durch die Kupplungsdrehzahl mit einer Abweichung (einem sogenannten Offset) von 50 U/min festgelegt.

In dem Betriebsmodus 2 wird naturgemäss ein Drosselklappensensor benötigt.

Das Steuerungssystem wird in diesem Unsicherheitsbereich immer einen (Kupplungs-)Schlupfregler aktivieren. Wenn die Polarität des aktivierten Schlupfreglers in diesem Bereich falsch ist oder nach und nach falsch wird, wird der Regler die Kupplung über die vorstehend genannte Null-Drehmomentgrenze hinaus integrieren. Wenn dies allmählich geschieht, d.h. mit wenig Dynamik, kann die Null-Drehmomentgrenze aktualisiert werden. Sie und demzufolge auch die Lage des Unsicherheitsbereichs kann damit an den jeweiligen Zustand des Kraftfahrzeugs adaptiert werden, und zwar über die gesamte Lebensdauer des Kraftfahrzeugs.

Das hierbei abgearbeitete Programm wird nachfolgend im Pseudocode wiedergegeben.

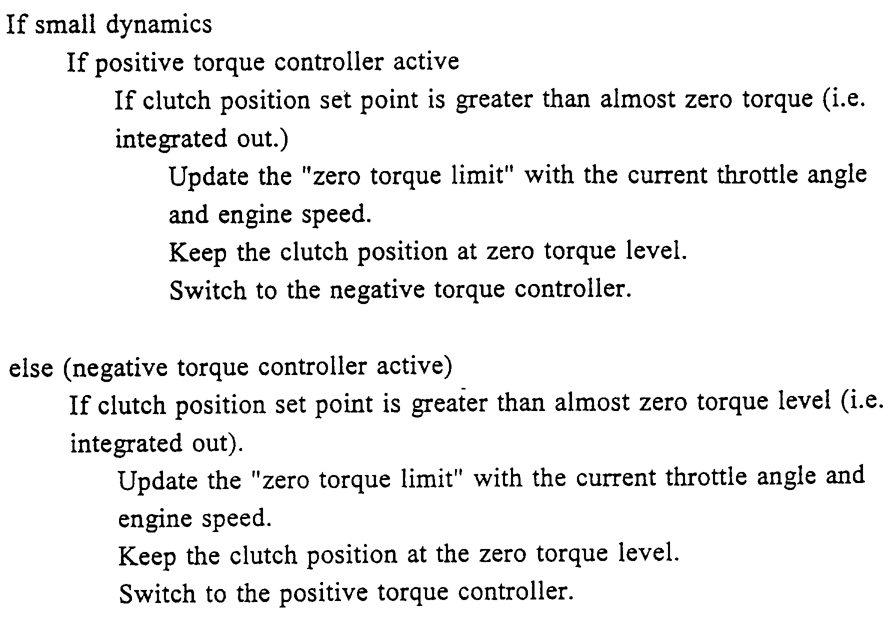

In der Kupplung findet kein Schlupf statt, wenn sie gar kein oder maximales drehmoment übertragen muss, d.h. wenn sie ganz ausgerückt oder ganz eingerückt ist. Typisch für diese Zustände ist, dass die automatische Kupplungssteuerung in ihnen die Motordrehzahl nicht regeln soll und kann. Diese Zustände treten auf:
im Leerlauf
beim Schalten
bei voll eingerückter Kupplung

Für diese Betriebszustände wird der Umschalter 72 benötigt. Die Drehzahlreglersteuerung 68 ist hier inaktiviert, die erforderliche Kupplungslage wird nicht mehr durch den Motordrehzahlregler 76 festgelegt.

Eine in Figur 5 gestrichelt gezeichnete Linie 80 deutet eine in einem Ausführungsbeispiel durchgeführte Aufteilung der einzelnen Funktionen der automatischen Kupplungssteuerung an: links von ihr dargestellte Funktionen sind in Software, d.h. duch Programme, und rechts von ihr dargestellte Funktionen durch Hardware, d.h. durch elektrische Schaltungen und mechanische Elemente realisiert. Im Falle einer voll eingerückten Kupplung sind die Rückkopplungsleitung 69 und eine weitere Rückkopplungsleitung 81 inaktiviert, d.h. es werden über sie keine Signale übertragen, oder aber die Signale werden weiterhin übertragen aber durch das Rechnerprogramm nicht beachtet. In diesem Zustand liefert der Stromregler 66 über den Verstärker 67 an das Proportionalventil lediglich einen Haltestrom (mit einer auf etwa ein Viertel reduzierten Stromstärke), der einerseits dafür sorgt, dass das Proportionalventil zu dem Ölspeicher hin offen, d.h. das Stellglied 8 drucklos ist. Andererseits ermöglicht der Haltestrom dem System, die Kupplung im Fall einer Notbremsung schnell genug auszurücken, um den Motor nicht abzuwürgen.

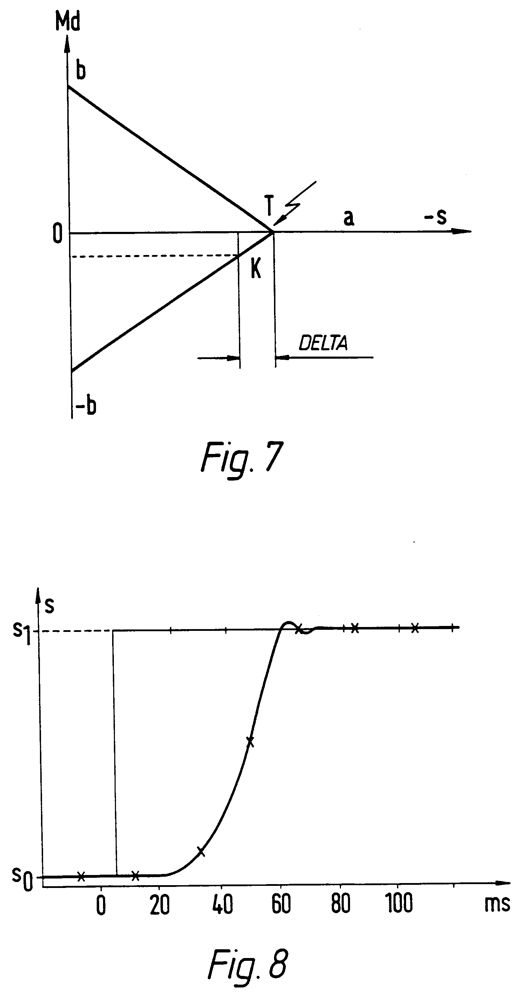

Bei einem mit der hier beschriebenen Steuerung versehenen Kraftfahrzeug (Figur 6) bedient der Fahrer den Schalthebel 18, das Lenkrad 24, ein Gaspedal 83 und ein Bremspedal 84. Entsprechende Sensorsignale gelangen zu der automatischen Kupplungssteuerung 85 (CMS = Clutch Management System) über folgende Signalleitungen: 86 die Schalthebelstellung, 87 die Bremsbetätigung und 88 die Drosselklappenstellung. Von dem Getriebe 4 und dem Motor 2 gelangen über eine Signalleitung 89 die Kupplungsdrehzahl bzw. über eine Signalleitung 90 die Motordrehzahl zu einer automatischen Kupplungssteuerung 85, die der erfindungsgemässen Steuerung entspricht. Von dieser gelangt das Stellsignal über eine Signalleitung 91 zu der Kupplung 36. Über den Antriebsstrang 92, 93 und 94 gelangt das Drehmoment von dem Motor 2 über die Kupplung 36 und das Getriebe 4 zu dem durch ein Rad 95 angedeuteten Achsantrieb des Kraftfahrzeugs. Durch an dem Antriebsstrang in beide Richtungen zeigende Pfeile wird angedeutet, dass die Richtung der Drehmomentübertragung umkehrbar ist.

Anhand von Figur 7 wird nun die Drehmomentübertragung bei schleifender Kupplung, d.h. bei einer Drehzahldifferenz zwischen der Eingangs- und Ausgangswelle der Kupplung, erläutert. Als Abszisse ist die Lage -s (mit negativem Vorzeichen, da in dieser Darstellung die Verschiebung der Kupplung beim Einrücken nach linkes erfolgt) des Ausrückers oder der Kupplung und als Ordinate das übertragene Drehmoment M_{d} aufgetragen. Oberhalb der Abszisse ist das übertragene Drehmoment positiv, der Motor treibt das Kraftfahrzeug an, unterhalb ist es negativ, der Motor bremst das Fahrzeug (gfs. mit Schubabschaltung).

In einer Ausgangsstellung a ist die Kupplung vollständig ausgerückt, d.h. es wird kein Drehmomentübertragen. Wird der Ausrücker nach links (in dieser Darstellung) bewegt, so wird weiterhin kein Drehmoment übertragen, bis sich die Druckplatte, die Kupplungsbelege und das Schwungrad berühren. Die Berührung findet bei einem Punkt T statt, der hier als Berührungspunkt bezeichnet wird. Wird der Ausrücker weiter nach links verschoben, so nimmt das übertragene Drehmoment wie aus der Zeichnung ersichtlich linear zu. Das durch die Kupplung übertragene Drehmoment ergibt eine Beschleunigung des Fahrzeugs. Eine gleichmässige starke oder schwache Beschleunigung wird normalerweise nicht als unkomfortabel empfunden. Was wirklich als unkomfortabel empfunden wird, ist eine stark veränderliche Beschleunigung, d.h. ein Beschleunigungsruck.

Eine typische Situation bei der ein Ruck auftreten kann, ist das Anfahren aus dem Stillstand. Wird die Drosselklappe betätigt, so muss die Kupplung für eine Drehmomentübertragung auf den Motor mit sehr kurzer Zeitverzögerung sorgen, um zu verhindern, dass der Motor zu stark hochdreht. Das heisst, dass der Ausrücker so schnell wie möglich von der Stellung a in die Stellung T bewegt werden muss. Würde die gleiche schnelle Bewegung des Ausrückers nach dem Passieren des Punktes T beibehalten, so würde ein geräuschvoller und unkomfortabler Ruck auftreten. Die Verschiebegeschwindigkeit des Ausrückers muss deshalb unmittelbar vor Erreichen des Punktes T auf einen Wert verringert werden, der im Hinblick auf das Ruckverhalten erträglich ist. Deshalb ist es für ein komfortables Fahren von höchster Bedeutung, eine genaue und immer auf dem neuesten Stand gebrachte Kenntnis des Berührungspunktes "T" zu haben.

Bei einem herkömmlichen handgeschalteten Getriebe wird die Stellung des Ausrückers direkt von dem Fahrer über eine mechanische oder hydraulische Kraftübertragung mit dem Kupplungspedal gesteuert. Bei einer automatischen Kupplung wird die Lage des Ausrückers durch das Stellglied gesteuert. In beiden Fällen ist die genaue Kenntnis des Berührungspunktes T ausschlaggebend für ein komfortables Fahren. Bei dem herkömmlich geschalteten Kraftfahrzeug hat der Fahrer diese Kenntnis aus Erfahrung. Bei einer automatisch betätigten Kupplung muss der Berührungspunkt T direkt oder indirekt gemessen werden. Erfindungsgemäss wird dies wie schon erläutert im wesentlichen mit zwei Regelkreisen erreicht: einem inneren oder unterlagerten Regelkreis, der die Lage des Stellgliedes auf einen Sollwert regelt, und ein äusserer Regelkreis, der diesen Sollwert vorgibt. Der äussere Regelkreis regelt die Motordrehzahl auf einen Sollwert, der sich aus dem jeweiligen Fahrzustand ergibt. Die Wirkung der Regelung kann anhand der folgenden drei Stufen erläutert werden, wobei aber zu beachten ist, dass dies nur gilt, wenn in der Kupplung ein Schlupf vorhanden ist.
1. Erkennt der überlagerte Regelkreis, dass die Motordrehzahl über dem Sollwert liegt, so kann dies nur daher rühren, dass die Kupplung zu wenig Drehmoment überträgt. Somit verändert der überlagerte Regelkreis den Sollwert für die Regelung der Kupplungsstellung, d.h. für den unterlagerten oder inneren Regelkreis, was in Figur 7 eine Verschiebung nach links bedeutet. Dadurch wird mehr den Motor abbremsendes Drehmoment übertragen, wodurch die Motordrehzahl in Richtung auf den Sollwert verringert wird.
2. Erkennt der überlagerte Regelkreis, dass die Motordrehzahl unter dem Sollwert liegt, so muss dies daher rühren, dass die Kupplung zuviel Drehmoment überträgt. Folglich ändert der überlagerte Regelkreis den Sollwert für die Kupplungsstellung, d.h. für den unterlagerten Regelkreis, was einer Verschiebung nach rechts in Figur 7 entspricht. Damit wird weniger Bremsmoment auf den Motor übertragen, wodurch die Motordrehzahl in Richtung auf den Sollwert zunimmt.
3. Erkennt der überlagerte Regelkreis keinen wesentlichen Unterschied zwischen der Motordrehzahl und ihrem Sollwert, so wird der Lagesollwert für das Kupplungs-Stellglied nicht verändert.

In anderen Worten, das Kupplungs-Stellglied strebt laufend eine Position oder Lage an, in der ein Bremsmoment auf den Motor übertragen wird, das genau mit dem von dem Motor erzeugten Drehmoment übereinstimmt. Diese Tatsache ist insofern von Bedeutung, als, wenn es einen Modus gibt, bei dem jedes Mal das gleiche Drehmoment übertragen wird, dann wenn dieser Modus aktiv wird, das Kupplungs-Stellglied jedes Mal auf die gleiche relative Stellung des Berührungsunktes T eingestellt wird. Daraus ergibt sich ein Verfahren, den Berührungspunkt zu eichen.

Dazu wird auf den unteren Kurvenzug von Figur 7 verwiesen. Die untere Grenze des Drehmomentbereichs, der von dem Motor erzeugt werden kann, ergibt sich in einem Betriebszustand, in dem die Drosselklappe geschlossen und das Motordrehmoment negativ ist, d.h. im Zustand der Schubabschaltung, bei dem der Motor das Fahrzeug bremst (oder das Fahrzeug den Motor "schiebt"). In Fahrzeugen mit fortschrittlicher Motorsteuerung wird in diesem Zustand die Kraftstoffzufuhr unterbrochen, zumindest oberhalb eines vorgegebenen Drehzahlwertes.

Unter der Voraussetzung, dass das bremsende Drehmoment, das durch interne Reibung und Dämpfung in dem Motor verursacht wird, nicht zu sehr von anderen Parametern abhängt (z.B. von der Temperatur), kann dieser Modus verwendet werden, um einen Messwert für den Berührungspunkt T mit der erwähnten Abweichung zu erhalten. Der Unterschied liegt nur darin, dass dies hier mit einem negativen statt mit einem positiven Drehmoment realisiert wird.

Um die Messung durchzuführen, aktiviert die Steuerung jedesmal, wenn der Drosselklappenwinkel null ist und der Motor bremst, die zwei vorstehend genannten Regelkreise. Zu diesem Zeitpunkt nimmt der Sollwert für die Motordrehzahl einen vorgegebenen Wert an, z.B. von 50 U/min unter der Drehzahl der Antriebswelle des Getriebes. Dabei wird das Stellglied für die Kupplungsbetätigung veranlasst, die Lage der Kupplung so einzuregeln, dass das durch sie übertragene Drehmoment exakt mit dem bremsenden Drehmoment des Motors übereinstimmt. Die eingeregelte Lage des Stellgliedes 8 wird bei jeder Schubabschaltung gemessen und der Messwert wird tiefpassgefiltert und gespeichert. Eine dem Drehmomentdiagramm des Motors in Abhängigkeit von der jeweiligen Motordrehzahl entnommenen Regelabweichung des gefilterten Messwerts ergibt den Eichwert für den Berührungspunkt T.

Die Abweichung oder der Wert "delta" für einen bestimmten Kraftfahrzeugtyp wird bei einem ersten Exemplar dieses Typs durch Versuch ermittelt und festgehalten.

Nach diesem Verfahren werden Verschiebungen des Berührungspunktes, die durch Kupplungsverschleiss verursacht werden, selbsttätig kompensiert. Erreicht der Verschleiss einen vorgegebenen Grenzwert, so kann über die Warnlampe 23 (Figur 1) ein Warnsignal an den Fahrer übermittelt werden, das ihn veranlasst, die Kupplungsbelege erneuern zu lassen.

Aus Figur 8 ist ein Messdiagramm einer mit der hier beschriebenen Steuerung durchgeführten Kupplungsbetätigung ersichtlich. Die obere horizontale Linie entspricht der ausgerückten Stellung s₁ (disengaged) die untere horizontale Linie der eingerückten Stelle s₀ (engaged) der Kupplung. Die linke etwa vertikale Linie gibt den Zeitpunkt wieder, in dem der Sollwert (setpoint) für die Kupplungsausrückung erzeugt wird, während der rechte Kurvenzug die Ausrückbewegung der Kupplung (clutch position) wiedergibt.

Wechselt der Fahrer den Getriebegang, so hat der Ausrückvorgang so schnell stattzufinden, dass die Kupplung auf jeden Fall voll ausgerückt ist, bevor der nächste Gang eingerückt wird, und zwar unabhängig davon, wie schnell der Fahrer den Schalthebel bewegt. Die dargestellte Kurve zeigt, dass die Kupplung innerhalb von 60 bis 70 ms nachdem der Sollwert von "eingerückt"-, in "ausgerückt"-Stellung wechselt, vollständig ausgerückt ist. Unter Berücksichtigung der Abtastzeiten in der Steuerung bedeutet dies, dass die Kupplung etwa 70 ms, nachdem der Fahrer beginnt, den Schalthebel zu bewegen, vollständig ausgerückt ist. Durch Fahrversuche wurde festgestellt, dass diese Zeitdauer ausreichend ist, auch wenn man den Schalthebel so schnell wie irgend möglich bewegt.

## Patentansprüche

1. Steuerung für eine automatisch betätigte Kupplung (36), die zwischen dem Motor (2) und dem Getriebe (4) eines Kraftfahrzeugs angeordnet ist und die durch ein einen Ausrücker (41) verschiebendes Stellglied (8) zwischen einer voll ausgerückten Lage über Lagen, in denen ein Schlupf auftritt, in eine voll eingerückte Lage bewegt wird, wobei ein Berührungspunkt (T) der Kupplung, bei dem Motordrehmoment beginnt übertragen zu werden ermittelt und die axiale Lage des Stellgliedes (8) bei diesem Berührungspunkt gespeichert wird, und wobei in dem Bereich oberhalb des Berührungspunktes (T), in dem kein Drehmoment übertragen wird, die Lage des Stellgliedes mit einem Lageregelkreis (70) geregelt wird, dadurch gekennzeichnet
- dass in dem Bereich unterhalb des Berührungspunktes (T), in dem Drehmoment übertragen wird, dem Lageregelkreis (70) für das Stellglied (8) ein Drehzahlregelkreis (78) für den Motor überlagert wird,
- dass die eingeregelte Lage des Stellgliedes (8) jeweils gemessen und der Messwert tiefpassgefiltert und gespeichert wird, und
- dass durch eine dem Drehtmomentdiagramm des Motors in Abhängigkeit von der jeweiligen Motordrehzahl entnommenen Regelabweichung des gefilterten Messwerts ein Eichwert für den Berührungspunkt (T) festgelegt wird.

2. Steuerung nach Anspruch 1, dadurch gekennzeichnet, dass die Motordrehzahl in dem Berührungspunkt (T) durch den Drehzahlregelkreis (78) auf einen Wert geregelt wird, der über der Drehzahl der Eingangswelle des Getriebes liegt, und dass die Differenz zwischen diesen beiden Drehzahlen von dem Betriebsmodus des Kraftfahrzeugs (Anfahren, Gangwechsel, Antriebsschlupf) abhängt.

3. Steuerung nach Anspruch 1, dadurch gekennzeichnet, dass die Motordrehzahl in dem Berührungspunkt (T) bei Schubbetrieb des Kraftfahrzeugs durch den Drehzahlregelkreis (78) auf eine Drehzahl geregelt wird, die etwas unter der Drehzahl der Kupplungsausgangswelle liegt.

4. Steuerung nach Anspruch 1, dadurch gekennzeichnet, dass bei Schubbetrieb des Kraftfahrzeugs und um eine vorgegebene Drehzahldifferenz unter der Drehzahl der Antriebswelle des Getriebes (4) liegender Motordrehzahl die Lage des Stellgliedes durch den Lageregelkreis (70) derart geregelt wird, dass das durch die Kupplung (36) übertragene drehmoment dem bremsenden Motordrehmoment gleicht.

5. Steuerung nach Anspruch 2, dadurch gekennzeichnet, dass die Drehzahldifferenz im Fahrbetrieb etwa 50 U/min beträgt.

6. Steuerung nach Anspruch 1, dadurch gekennzeichnet, dass dem Lageregelkreis (70) ein Stromregelkreis (58) unterlagert ist.

## Claims

1. Controller for an automatically actuated clutch (36) which is arranged between the engine (2) and the gearbox (4) of a motor vehicle and which is moved by an actuator (8) displacing a disengagement unit (41) between a fully disengaged position via positions in which slip occurs into a fully engaged position, wherein a touch point (T) of the clutch, at which the engine torque starts to be transmitted, is determined and the axial position of said actuator (8) at this touch point is stored, and wherein in the range above said touch point (5), in which no torque is transmitted, the position of said actuator (8) is controlled by a closed-loop position control circuit (70), characterized in
- that in the range below said touch point (5), in which torque is transmitted, said closed-loop position control circuit (70) for said actuator (8) is made subordinate to a closed-loop speed control circuit (78) for the engine,
- that the respective adjusted position of said actuator (8) is measured and the measured value is filtered in a low-pass filter and stored, and
- that a calibration value for said touch point (5) is determined by a deviation of the filtered measured value, which is taken from the torque diagram of the engine as a function of the respective engine speed.

2. Controller according to Claim 1, characterized in that the engine speed in said touch point (T) is controlledly adjusted by said closed-loop speed control circuit (78) to a value above the speed of the input shaft of said gearbox, and that the difference between these two speeds depends on the operating mode of the motor vehicle (starting, gear shift, engine slip).

3. Controller according to Claim 1, characterized in that in thrust operation of the motor vehicle the engine speed in said touch point (T) is controlledly adjusted by said closed-loop speed control circuit (78) to a value slightly below the speed of the clutch output shaft.

4. Controller according to Claim 1, characterized in that in thrust operation of the motor vehicle and with an engine speed below the speed of the drive shaft of said gearbox (4) by predetermined speed difference, the position of said actuator is controlled by said closed-loop position control circuit (70) in such a way that the torque transmitted by the clutch (36) is equal to the braking engine torque.

5. Controller according to Claim 2, characterized in that the speed difference in driving operation is approximately 50 rpm.

6. Controller according to Claim 2, characterized in that a closed-loop current control circuit (58) is made subordinate to said closed-loop position control circuit (70).

## Revendications

1. Commande pour un embrayage (36) actionné de façon automatique, qui est disposé entre le moteur (2) et la transmission (4) d'un véhicule automobile et qui est déplacé par un organe de réglage (8), qui déplace une butée d'embrayage (41), entre une position totalement désenclenchée et une position totalement enclenchée en passant par des positions, dans lesquelles apparait un glissement, et dans laquelle un point de contact (T) de l'embrayage, pour lequel il est établi que le couple moteur commence à être transmis et la position axiale de l'organe de réglage (8) pour ce point de contact est mémorisée, et dans laquelle la position de l'organe de réglage est réglée par un circuit de régulation de position (70) dans la zone située au-dessus du point de contact (T), dans laquelle aucun couple n'est transmis, caractérisée en ce
- qu'un circuit (78) de régulation de vitesse du moteur est superposé au circuit (70) de régulation de position pour l'organe de réglage (8) dans la zone située au-dessous du point de contact (T), dans laquelle un couple est transmis,
- que la position réglée de l'organe de réglage (8) est respectivement mesurée et la valeur de mesure est soumise à un filtrage passe-bas et est mémorisée, et
- qu'une valeur d'étalonnage pour le point de contact (T) est fixée au moyen d'un écart de réglage de la valeur de mesure filtrée, qui est tiré du diagramme du couple du moteur en fonction de la vitesse de rotation respective du moteur.

2. Commande selon la revendication 1, caractérisée en ce que la vitesse de rotation du moteur au niveau du point de contact (T) est réglée par le circuit (78) de régulation de la vitesse de rotation à une valeur, qui est supérieure à la vitesse de rotation de l'arbre d'entrée de la transmission, et que la différence entre ces deux vitesses de rotation dépend du mode de fonctionnement du véhicule automobile (démarrage, changement de vitesse, glissement d'entraînement).

3. Commande selon la revendication 1, caractérisée en ce que la vitesse de rotation du moteur au niveau du point de contact (T) est réglée dans le cas d'un entraînement en poussée du véhicule automobile, par le circuit (78) de régulation de la vitesse de rotation, à une vitesse de rotation qui est légèrement inférieure à la vitesse de rotation de l'arbre de sortie de l'embrayage.

4. Commande selon la revendication 1, caractérisée en ce que dans le cas du fonctionnement en poussée du véhicule automobile et pour une vitesse de rotation du moteur inférieure d'une différence prédéterminée à la vitesse de rotation de l'arbre d'entraînement de la transmission (4), la position de l'organe de réglage est réglée par le circuit de régulation de position (70) de telle sorte que le couple transmis par l'embrayage (36) est égal au couple résistant du moteur.

5. Commande selon la revendication 2, caractérisée en ce que la différence de vitesse de rotation lors de la conduite est égale à environ 50 tr/mn.

6. Commande selon la revendication 2, caractérisée en ce qu'un circuit (58) de régulation du courant est subordonné au circuit (70) de régulation de position.
